Europäisches Patentamt

European Patent Office

Office européen des brevets

(11) Publication number: **0 505 007 B1**

# EUROPEAN PATENT SPECIFICATION

(45) Date of publication of patent specification: **15.11.95**

(51) Int. Cl.[6]: **A23D 7/02**, A23D 7/00, C11C 3/10

(21) Application number: **92200772.9**

(22) Date of filing: **18.03.92**

(54) **Cream, churned product made therefrom and method of manufacturing them.**

(30) Priority: **21.03.91 GB 9106011**

(43) Date of publication of application:
**23.09.92 Bulletin 92/39**

(45) Publication of the grant of the patent:
**15.11.95 Bulletin 95/46**

(84) Designated Contracting States:
**AT BE CH DE DK ES FR GB GR IT LI NL PT SE**

(56) References cited:
**EP-A- 0 151 450**
**EP-A- 0 155 246**
**EP-A- 0 347 008**
**AU-A- 3 305 678**

**WORLD PATENTS INDEX Section Ch, Week 7732, Derwent Publications Ltd., London, GB; Class D, AN 77-56774Y**

(73) Proprietor: **UNILEVER N.V.**
**Weena 455**
**NL-3013 AL Rotterdam (NL)**

(84) Designated Contracting States:
**BE CH DE DK ES FR GR IT LI NL PT SE AT**

(73) Proprietor: **UNILEVER PLC**

**Unilever House**
**Blackfriars**
**P.O. Box 68**
**London EC4P 4BO (GB)**

(84) Designated Contracting States:
**GB**

(72) Inventor: **Brockhus, Jeroen J.J.J., Unilever Reseach**
**Vlaardingen Lab.,**
**Olivier van Noortlaan 120**
**NL-3133 AT Vlaardingen (NL)**
Inventor: **Schnell, Dagmar**
**Richterstrasse 18**
**W-2000 Hamburg 76 (DE)**
Inventor: **Vermaat, Karel Theodorus**
**Olivier van Noortlaan 120**
**NL-3133 Vlaardingen (NL)**

(74) Representative: **Sikken, Antonius H. J. M. et al**
**UNILEVER N.V.,**
**Patent Division,**
**P.O. Box 137**
**NL-3130 AC Vlaardingen (NL)**

EP 0 505 007 B1

**Description**

The present invention relates to a cream, to a churned product made therefrom, and to processes for producing such a cream and such a product.

Creams are emulsions of the oil-in-water type, and are well known both as starting materials and intermediates in methods for the production of edible spreads, including butter and margarine. In such methods the dispersed fat phase of the cream is converted into a continuous crystallised fat phase in which a dispersed aqueous phase is present.

With dairy cream, particularly in conventional butter-making, this has been accomplished by the well-established method of cooling and working the cream in a churn.

For the purposes of the present specification the term churn and references to churning are intended to embrace respectively all apparatus and methods using such apparatus in which a plastified edible fatty emulsion is formed under conditions of relatively low shear, with the separation of a buttermilk like component. Examples of many types of churning processes and apparatus are well known to the man skilled in the art. The term dairy fat as used herein refers to fats obtained from lacteal fluids, whereas the term non-dairy fat refers to fats such as may be obtained from vegetable matter, from animal carcasses or marine sources such as fish. The term animal fat is generally intended to include within its scope fats obtained from animal sources such as animal tallow and lard, but to exclude dairy fats. Other than where the context demands otherwise the terms "oil" and "fat" are considered interchangeable.

During churning partial phase separation occurs with loss of much of the aqueous phase as buttermilk and a concentration of the dairy fat phase in the butter mass. A vast body of literature is concerned with the process conditions and physical changes which subsist during the butter-churning process.

Churning of margarines is known. In the margarine production process described by Mouries in GB 2157 (1869) rendered (fractionated) animal fat having the same melting point as dairy fat was dispersed in milk plasma by churning and the product treated with ice-cold water to cause the emulsion to solidify.

Some attempt has been made to produce such products by blending dairy fat containing materials with vegetable fats and churning the resulting composition. For the avoidance of doubt, it should be noted that the use of a churning process excludes the use of a "Votator" (RTM) phase-inversion process. While it has been suggested that 'churning' can be performed in a "Votator" (RTM): no phase separation occurs in a "Votator" process and this cannot be described as churning.

Churned products which comprise both dairy and vegetable fat have been marketed as "BUTTERINES" in the USA, with considerable commercial success, by "ZANDERS CREAMERY" of Wisconsin. In the manufacture of such products a blend of dairy cream and a partially hydrogenated soybean oil was churned to obtain a product comprising 50% butterfat and 50% vegetable fat.

European Patent 0106620 (UK Milk Marketing Board) discloses a process in which cream separated from cows milk is blended with soybean oil and hydrogenated soybean oil and used in a process to produce a composition having the same solid fat content as butter, and thus to overcome seasonal variations in the hardness of butter. Up to 75% of the total fat content can comprise non-dairy triglycerides, without detriment to the rheological properties of the product. However, in order to maintain the hardness of the product it was found necessary to use hydrogenated non-dairy fats, and the preferred combinations of vegetable and dairy fat disclosed in EP 0106620 were close to 50/50 blends.

European patent 0155246 (Svenska MR upa and ARLA) goes further towards an attempt to churn a pure vegetable blend, but stipulates that the iodine value of the blend must be equal to that of butter. Although the examples of this patent again state that excellent products can be made with a 50/50 blend, the product quality deteriorates as the vegetable oil content is increased. Examples show that when the vegetable fat content reaches 80% the products are only "acceptable with some hesitation". At a vegetable fat content of 90% the products are considered "too soft for commercial use". The skilled man would conclude from this art that even with low iodine values, non-dairy churned products are unlikely to approach the rheology of butter when churned.

EP 0155246 also discusses the so-called "BREGOTT" technology, in which vegetable oil is dosed up to 70% of total fat into a cream. In the original "BREGOTT" method, as disclosed in GB 1217395, dairy cream was blended with up to 35% vegetable oil prior to churning, but after ripening of the cream. Above 35% vegetable oil products are too soft to use.

Another approach is disclosed in US 4425370 (Madison). In that document, it is proposed to carefully process a skim-milk /vegetable oil cream to achieve an oil-droplet size range essentially similar to that of dairy cream, before blending the non-dairy cream with dairy-cream and churning the mixture. US 4425370 does not disclose a pure vegetable oil formulation but uses 60% vegetable oil and 40% cream. Thus, the final product contains around 40% butterfat on fat phase.

GB 1216568 discloses a vegetable cream with a high pufa content which can be churned to give a product with 14% poly-unsaturated fatty acids 35.5% mono-unsaturated fatty acids and 50.5% saturated fatty acids. This product would have an iodine value of around 60.

EP 0 347 008 is another reference which describes the manufacture of churned margarines with a high content of unsaturated fats of vegetable origin. The solution to obtain a butter-like churned product consists in controlling the size of the dispersed oil droplets previous to the churning step. The iodine value may extend beyond 85.

From the above, it can be seen that the art is replete with specifications relating to butter-like spreads obtainable by churning. However experience has shown that the products disclosed in the art which simultaneously exhibit a stability, texture and ease of manufacture similar to that of butter, can do so only by sacrificing the nutritional qualities of margarine by the incorporation of saturated fats, particularly butterfat.

Our co-pending patent applications EP 0 347 007 discloses the production of improved butter-like products by the combined use of a specific homogenisation step and churning. The fat formulations disclosed in that specification comprise butterfat, soybean oil and hardened soyabean oil. These products have a vegetable fat content above 70% and an iodine value above 85. Despite considerable success in obtaining butter-like properties, it was determined that certain fats led to a product which showed excessive "post-hardening" on storage.

"Post-hardening" is the process by which spreads exhibit an increased hardness after some storage. While the phenomenon of post-hardening can be an advantage in "Votator" processing, it is frequently a problem when churning. Excessive post-hardening can lead to products which are too firm for convenient use at some temperatures.

We have now determined that the use of at least one interesterified fat of a specified solids content avoids the difficulties of post-hardening.

The obtained products have a moderately high iodine value and a high vegetable fat content. They have a higher vegetable fat content than "BUTTERINES" and are firm enough for use, without suffering from post-hardening.

According to a first aspect of the present invention there is provided a process for the production of a spread which comprises the steps of:

a) preparing a vegetable fat cream comprising at least one interesterified fat having a solid fat index as measured by NMR at 10°C of greater than 30%

b) dosing into the said vegetable fat cream 1-25% on total fat phase of vegetable oil,

c) churning the cream/fat mixture to obtain a water in oil emulsion spread having a solid fat index as measured by NMR at 10°C of greater than 20%

Where not explicitly mentioned solid fat index is as measured by NMR spectroscopy. A suitable method of measuring solid fat index by NMR spectroscopy is described in Haighton et al (Fette Seifen Anstrichmittel No.5 1978, 80, p. 180).

Typically the vegetable fat cream comprises fats having a lower iodine value that the dosed vegetable oil. The preferred level of oil injection is in the range 10-20 wt.% most preferably 15 wt.%.

While not wishing to be bound by theory, it is observed that the presence of too much oil in the cream may cause breakage of the foam formed during the early stage of churning. This will prevent aeration of the cream and make churning difficult if not impossible. It is therefore desirable to inject the oil into the churn. Suitable oil injection temperatures are in the range 0-10°C, preferably around 5°C.

Generally, the method of the invention makes use of a continuous churn. Suitable for this purpose is the so-called "fritsch" continuous butter-maker.

It is envisaged that in the presence of some amount of dairy cream the addition of emulsifiers to accomplish churning will not be required. However, it is preferable to include an oil-in-water emulsion disrupter in the pre-mix for churning. Suitable emulsion disrupters include the water-in-oil promoting emulsifiers.

Suitable water-in-oil emulsifiers include the so-called saturated mono-glyceride, tweens, lactic acid ester emulsifiers and lecithins. These are preferably present between 0.05 wt.% and 1 wt.% by fat phase.

Preferably, no dairy cream is added to the non-dairy cream during the process. However, the addition of substantially equal or minor amounts of dairy cream or dairy fats is not excluded. Consequently, the invention extends to products comprising less than 60% butterfat on fat phase, preferably 50% or less butterfat and most preferably 30% or less butterfat.

In a preferred embodiment of the present invention the aqueous phase of the vegetable cream comprises a lacteal fluid, preferably buttermilk or skim-milk. The skim-milk can be natural skim-milk or reconstituted by solution of skim-milk powder in a suitable aqueous medium. The churned by-product buttermilk, whether fresh or recombined can be employed as a component of the aqueous phase.

As mentioned above, the fatty components of the cream are in general non-dairy fats. These may be modified by hydrogenation as is well-known in the art of margarine manufacture. However, the use of hydrogenated fat should be minimized where a high content of unsaturated or poly-unsaturated fat is desired.

In a preferred embodiment of the present invention the non-injected portion of the fat phase comprises 1-100% of an interesterifed fat having a solid fat index at 10°C in the range 30-50% and comprising 0-99% of a non-interesterified fat. In a preferred embodiment of the invention the solid fat index of the whole fat phase at 10°C of the product is 20-50%. An advantage of a relatively low solids level at low temperature is that the product is easier to spread at low temperature than butter. However, if the solids level is low at low temperature and the solids level decreases sharply at higher temperatures, then the products will be too soft for table use. The proper choice of interesterified fats enables to obtain a solid line so as to give a product which is sufficiently soft at refrigerator storage temperatures and sufficiently hard at table temperature.

A suitable fat blend for the non-dairy cream comprises 40-60 wt.% of a liquid oil and 60-40 wt.% of an interesterified blend of one or more fats rich in palmitic and/or lauric fatty acids together with one or more fats rich in eighteen carbon fatty acid residues. Particularly preferred fat blends comprise a. interesterified mixtures of palm fat and palm kernel fat or fractions thereof and b. one or both of a liquid vegetable oil and a hydrogenated vegetable oil. Fractions comprise the palm stearin of palm fat. Suitable vegetable oils comprise sunflower oil, rapeseed oil, safflower oil and soyabean oil as well as blends of two or more of these.

Preferably the surface-weighted mean diameter ($D_{3,2}$) of the dispersed droplets in the cream should be in the range 3-8 $\mu$m prior to churning, preferably below 6 $\mu$m, most preferably in the range 4-5 $\mu$m.

Churning is preferably carried out at a temperature of 0-10 °C.

The present invention enables the production of spreadable, churned, edible emulsions, comprising 70-100% by weight of vegetable fat on fat phase, said fat phase having a solid fat index as measured by NMR at 10°C of greater than 20% and an iodine value in the range 65-85.

The following example illustrates the present invention.

EXAMPLE

A fat phase of the following composition is loaded into a first supply tank. The tank is water-jacketed at and the contents held at a temperature of 60°C:

50% soyabean oil,

50% interesterified fat.

The interesterified fat comprised an interesterified mixture of approximately 1:1:2 of palm kernel fat, palm stearin and hardened rapeseed oil.

After temperature equilibration 0.2 wt.% of a proper monoglyceride emulsifier was added to the fat phase and, optionally, the same amount of a lecithine. An aqueous phase comprising buttermilk was loaded into a second water-jacketed tank at a temperature of 60°C and allowed to equilibrate.

Liquid (unhardened) soybean oil was loaded into a third tank water-jacketed at a temperature of 5°C.

Cream preparation

Fat phase and aqueous phase were drawn from the first and second tanks and pumped through a static mixer, a homogenizer and a Pasteurizer.

The static mixer comprised a plurality of baffles arranged so as to define a serpentine flow path for the mixture of fat and aqueous phase. Flow rates were chosen such that the mixture contained 40 wt.% fat and 60 wt.% aqueous phase.

The homogenizer was a "Rannie" two stage homogenizer, operating at a total pressure drop of 2-3 bar. Homogenisation was performed at a temperature of 60°C.

The Pasteurizer was a plate heat exchanger. The Pasteurization temperature was typically above 80°C, in particular a temperature of 92°C was found to be suitable.

The resulting cream passed into a ripening tank and was held at a temperature of 5°C overnight where crystallisation of a portion of the fat blend occurred. Analysis of the cream revealed that surface-weighted mean diameter ($D_{3,2}$) of the dispersed droplets was of the order of 4.9 $\mu$m, and the solids content of the fatty components of the cream was 32.1 % at 10°C.

Churning

After ripening, cream was drawn from the ripening tank, warmed in line to a churning temperature of 10°C and passed into the churn. 15% of oil drawn from the third tank was injected into the cream stream at an oil temperature of 5°C. The churn was of the Ahlborn type 316/20 and was operated at a beater speed of from 1600-2000, preferably 900 r.p.m for the throughput of one ton per hour. The resulting product was packed in tubs.

The product is spreadable at refrigerator temperature, did not show excessive post hardening and had a dull, butter-like appearance. The product exhibits an acceptable oral melt and flavour release.

Further trials were performed with (as an alternative to the buttermilk used as the aqueous phase of the cream) an aqueous solution of:

a) soured whey powder,

b) mixtures of reconstituted, soured whey powder and soured buttermilk.

c) reconstituted, soured buttermilk powder.

Acceptable products were obtained when the alternative aqueous phases (a, b and c) were used.

Typical results for the N-values are given below. These results indicate how the use of oil injection enables the production of a softer, acceptable product with a higher iodine value.

|  | N10 | N20 | N30 | N35 | IV |
|---|---|---|---|---|---|
| Without oil injection using a Votator | 32.1 | 13 | 3 | 0 | 73 |
| With 15% oil injection by churning | 26 | 11 | 2 | 0 | 81 |

Hardness measurements

Spreads prepared according to the present invention were compared to spreads prepared otherwise but having the same high vegetable fat content. The hardness was measured immediately after preparation and again after three days, with and without cycling. Cycling is keeping three days at 23 °C and back to measuring temperature. With cycling occurring of the post-hardening effect is accelerated.

| Spread | Hardness (Stevens value) in g/cm$^2$ at 10°C | | |
|---|---|---|---|
| | initial value | with cycling | without |
| A | 219 | 209 | 242 |
| B | 338 | 470 | 336 |
| C | 105 | 390 | 170 |
| E | 1450 | * | * |
| F | 615 | * | * |

\* excessive post-hardening is mentioned in EP 0 347 007 to occur without being quantified.

Spread A is made according to the invention by churning with 21% oil dosed before churning. Good spreadibility and little post-hardening.

Spread B is made according to the invention by churning with 21% oil dosed before churning but in contrast to the invention using partially hardened vegetable oils and fats which have not been interesterified. The hardness at 10 °C is above 300 which is considered to be the upper limit for good spreadability. Moreover, there is considerable post-hardening.

5

Spread C is made by applying votator processing to a water and oil emulsion having the same ingredients as spread A. The hardness at 10 ° C is acceptable, but there is considerable post-hardening. Spreads D and E are the spreads taken from examples 1 and 2 respectively of EP 0 347 007 which have been prepared by an alternative churning process using a blend with a high vegetable fat content. Even without post-hardening the spreads are at 10 ° C too hard for spreading.

From the recorded data it clearly appears that the churned spreads prepared according to the invention show a remarkable improvement in hardness at refrigerator temperature and a lowered tendency to post-hardening.

## Claims

1. A process for the production of a spread which comprises the steps of:
   a) preparing a vegetable fat cream comprising at least one interesterified fat having an solid fat index as measured by NMR at 10 ° C of greater than 30%
   b) dosing into the said vegetable fat cream 1-25% on total fat phase of vegetable oil, and,
   c) churning the cream/fat mixture to obtain a water in oil emulsion spread having a solid fat index as measured by NMR at 10 ° C of greater than 20%.

2. A process according to claim 1 wherein the vegetable fat cream comprises fats having a lower iodine value that the dosed vegetable oil.

3. A process according to any one of the preceeding claims wherein the level of oil injection is in the range 10-20 wt.%, most preferably 15 wt.%.

4. A process according to any of the preceeding claims wherein the oil injection temperature is in the range 0-10 ° C, preferably around 5 ° C.

5. A process according to any of the preceeding claims wherein the non-injected portion of the fat phase comprises 1-100% of an interesterifed fat having a solid fat index at 10 ° C in the range 30-50% and comprising 0-99% of a non-interesterified fat.

6. A process according to any one of the preceeding claims wherein the solid fat index of the whole fat phase at 10 ° C of the product is 20-50%.

7. A process according to any of the preceeding claims wherein the fat blend of the cream comprises 40-60% of a liquid oil and 60%-40% of an interesterified blend of one or more fats rich in palmitic and/or lauric fatty acids together with one or more fats rich in eighteen carbon fatty acid residues.

8. A process according to claim 7 wherein the fat phase of the cream comprises an interesterified mixture of palm fat and palm kernel fat or fractions thereof and one or both of a liquid vegetable oil and a hydrogenated vegetable oil.

9. A process according to any one of the preceeding claims wherein the surface-weighted mean diameter ($D_{3,2}$) of the dispersed droplets in the cream prior to churning is in the range 3-8 $\mu$m, preferably 3-6 $\mu$m, most preferably 4-5 $\mu$m.

## Patentansprüche

1. Verfahren zur Herstellung eines Aufstriches, das die Schritte umfaßt:
   a) Herstellung eines Pflanzenfettrahms, der mindestens ein interesterifiziertes Fett mit einem Festfettindex, gemessen durch NMR bei 10 ° C, von mehr als 30 % aufweist,
   b) Einführen von 1 bis 25 % pflanzlichem Öl, bezogen auf die Gesamtfettphase, in den Pflanzenfettrahm,
   c) Kirnen der Rahm/Fett-Mischung zur Erzielung eines Wasser-in-Öl-Emulsionsaufstriches mit einem Festfettindex, gemessen durch NMR bei 10 ° C, von mehr als 20 %.

2. Verfahren nach Anspruch 1, bei dem der Pflanzenfettrahm Fette mit einer niedrigeren Jodzahl als das zugesetzte pflanzliche Öl umfaßt.

**3.** Verfahren nach irgendeinem der vorhergehenden Ansprüche, bei dem der Anteil der Öleinspritzung im Bereich von 10 bis 20 Gew.-%, insbesondere bei 15 Gew.-%, liegt.

**4.** Verfahren nach irgendeinem der vorhergehenden Ansprüche, bei dem die Öleinspritztemperatur im Bereich von 0 bis 10 ° C, vorzugsweise um 5 ° C, liegt.

**5.** Verfahren nach irgendeinem der vorhergehenden Ansprüche, bei dem der nicht eingespritzte Anteil der Fettphase 1 bis 100 % eines interesterifizierten Fettes mit einem Festfettindex bei 10 ° C im Bereich von 30 bis 50 % mit 0 bis 99 % eines nicht interesterifizierten Fettes umfaßt.

**6.** Verfahren nach irgendeinem der vorhergehenden Ansprüche, bei dem der Festfettindex der gesamten Fettphase des Produktes bei 10 ° C 20 bis 50 % beträgt.

**7.** Verfahren nach irgendeinem der vorhergehenden Ansprüche, bei dem das Fettgemisch des Rahms 40 bis 60 % eines flüssigen Öles und 60 bis 40 % eines interesterifizierten Gemisches aus einem oder mehreren an Palmitin- und/oder Laurinfettsäuren reichen Fetten mit einem oder mehreren Fetten, die an Fettsäureresten mit 18 C-Atomen reich sind, umfaßt.

**8.** Verfahren nach Anspruch 7, bei dem die Fettphase des Rahms eine interesterifiierte Mischung aus Palmfett und Palmkernfett oder Fraktionen davon und ein flüssiges pflanzliches Öl und/oder ein hydriertes pflanzliches Öl umfaßt.

**9.** Verfahren nach irgendeinem der vorhergehenden Ansprüche, bei dem der oberflächengewichtete mittlere Durchmesser ($D_{3,2}$) der dispergierten Tröpfchen im Rahm vor dem Kirnen im Bereich von 3 bis 8 $\mu$m, vorzugsweise 3 bis 6 $\mu$m und insbesondere 4 bis 5 $\mu$m, liegt.

**Revendications**

**1.** Procédé de production d'un produit à tartiner qui comprend les étapes de :
(a) préparer une crème de graisse végétale comprenant au moins une graisse interestérifiée ayant un indice de graisse solide mesuré par RMN à 10 ° C de plus de 30% ;
(b) doser dans ladite crème de graisse végétale de 1 à 25% par rapport à la phase grasse totale d'huile végétale ; et
(c) baratter le mélange crème/graisse pour obtenir un produit à tartiner en émulsion eau-dans-huile ayant un indice de graisse solide mesuré par RMN à 10 ° C supérieur à 20%.

**2.** Procédé selon la revendication 1, dans lequel la crème de graisse végétale comprend des graisses ayant un plus bas indice d'iode que l'huile végétale dosée.

**3.** Procédé selon la revendication 1 ou 2, dans lequel le niveau d'injection d'huile est compris entre 10 et 20% en poids et est de préférence de 15% en poids.

**4.** Procédé selon la revendication 1, 2 ou 3, dans lequel la température d'injection d'huile est comprise entre 0 et 10 ° C et est de préférence d'environ 5 ° C.

**5.** Procédé selon l'une quelconque des revendications précédentes, dans lequel la portion non injectée de la phase grasse comprend de 1 à 100% d'une graisse interestérifiée ayant un indice de graisse solide à 10 ° C compris entre 30 et 50 ° % et comprenant de 0 à 99% d'une graisse non interestérifiée.

**6.** Procédé selon l'une quelconque des revendications précédentes dans lequel l'indice de graisse solide de la phase grasse entière à 10 ° C du produit est de 20 à 50%.

**7.** Procédé selon l'une quelconque des revendications précédentes dans lequel le mélange de graisse de la crème comprend 40 à 60% d'une huile liquide et 60 à 40% d'un mélange interestérifié d'une ou plusieurs graisse(s) riche(s) en acides gras palmitique et/ou laurique ensemble avec une ou plusieurs graisse(s) riche(s) en restes d'acides gras en $C_{18}$.

**8.** Procédé selon la revendication 7, dans lequel la phase grasse de la crème comprend un mélange interestérifié de graisse de palme et de graisse de coeur de palmier ou des fractions de celles-ci et une huile végétale liquide et/ou une huile végétale hydrogénée.

**9.** Procédé selon l'une quelconque des revendications précédentes dans lequel le diamètre moyen pondéré en surface ($D_{3,2}$) des gouttelettes dispersées dans la crème avant barattage est compris entre 3 et 8 $\mu$m, de préférence entre 3 et 6 $\mu$m, et surtout, entre 4 et 5 $\mu$m.